Europäisches Patentamt

European Patent Office

Office européen des brevets

(19)

(11) Veröffentlichungsnummer: **0 300 118 B1**

# EUROPÄISCHE PATENTSCHRIFT

(12)

(45) Veröffentlichungstag der Patentschrift: **09.10.91**

(21) Anmeldenummer: **88102136.4**

(22) Anmeldetag: **23.08.84**

(51) Int. Cl.⁵: **B29C 33/38**, B29C 33/40, B29C 59/04

(60) Veröffentlichungsnummer der früheren Anmeldung nach Art. 76 EPÜ: **0 144 541**

(54) **Verfahren zur Herstellung eines Giessbandes aus Silikon zum Giessen einer Kunststoffolie mit einer Narbung, insbesondere einer natürlichen Ledernarbung.**

(30) Priorität: **14.09.83 DE 3333179**
**20.02.84 DE 3405985**

(43) Veröffentlichungstag der Anmeldung:
**25.01.89 Patentblatt 89/04**

(45) Bekanntmachung des Hinweises auf die Patenterteilung:
**09.10.91 Patentblatt 91/41**

(84) Benannte Vertragsstaaten:
**BE FR GB IT LU NL SE**

(56) Entgegenhaltungen:
AT-A- 262 594       DE-A- 2 217 566
DE-A- 2 552 547     DE-A- 3 332 460
DE-B- 1 214 389     DE-B- 1 220 586
DE-B- 1 504 397     FR-A- 2 257 401
GB-A- 660 279       US-A- 3 081 495
US-A- 4 250 135

(73) Patentinhaber: **J. H. Benecke AG**
**Beneckeallee 40**
**W-3000 Hannover 1(DE)**

(72) Erfinder: **Böttcher,Hugo**
**Freihorstfeld 40**
**W-3000 Hannover 71(DE)**
Erfinder: **Heimrich,Klaus**
**Am kahlen Berg 15**
**W-3008 Garbsen 6(DE)**
Erfinder: **Hildebrandt,Gustav**
**Wilhelm-Busch-Strasse 14**
**W-3262 Auetal(DE)**
Erfinder: **Kracke,Heinrich,Dr.**
**Backhausstrasse 15**
**W-3160 Lehrte(DE)**
Erfinder: **Richter,Johannes**
**Wittinger Strasse 53**
**W-3100 Celle(DE)**

(74) Vertreter: **Leine, Sigurd, Dipl.-Ing. et al**
**LEINE & KÖNIG Patentanwälte Burckhardt-**
**strasse 1**
**W-3000 Hannover 1(DE)**

## Beschreibung

Die Erfindung betrifft ein Verfahren zur Herstellung eines Gießbandes aus Silikon zum Gießen einer Kunststoffolie mit einer Narbung gemäß dem Oberbegriff des Anspruchs 1.

Durch die DE-AS 12 14 389 ist ein Verfahren bekannt, bei dem die Folienbahn aus Silikongummi endlos und die Narbung in Negativform dadurch gebildet ist, daß Silikonkautschuk auf die Oberfläche von Leder, Textilien oder Holz aufgegossen, vulkanisiert und danach abgezogen wird. Da Leder naturgemäß jedoch nur in kurzen Stücken zur Verfügung steht, hat die Narbung in der Negativform aus Silikongummi Stoßstellen, so daß das gesamte Verfahren zwar kontinuierlich abläuft, die Narbung jedoch wie bei natürlichem Leder diskontinuierlich ist. Zuschnitte aus der fertigen Kunststoffolie sind daher genauso schwierig durchzuführen wie bei natürlichem Leder, auch ist der Verschnitt genauso groß.

Aus der DE-AS 15 04 397 ist ein Verfahren zur Herstellung eines Gießbandes der betreffenden Art bekannt, bei dem als Gießband eine Folienbahn aus Papier verwendet wird, in deren Oberfläche eine Narbung mit Hilfe einer eine harte Oberfläche aufweisenden Prägewalze aus Metall eingeprägt ist, auf die dann Silikonkautschuk aufgegossen wird, der nach Aushärtung das Gießband bildet, jedoch kann die Narbung in der Prägewalze nur künstlich hergestellt werden, und außerdem muß die Oberfläche des geprägten Papiers mit einem Stoff behandelt werden, der ein Ankleben des aufgegossenen, flüssigen Kunststoffs verhindert. Durch beide Maßnahmen läßt sich daher nur eine eintönige und einfache Narbung in der Folienbahn aus Papier und damit auch in der fertigen Kunststoffolie erzeugen, die von der natürlichen Narbung weit entfernt ist.

Der Erfindung liegt die Aufgabe zugrunde, ein Verfahren der betreffenden Art anzugeben, bei dem die Narbung nicht eintönig und einfach ist, vielmehr weitgehend einer natürlichen Ledernarbung, der Oberfläche eines Gewebes oder dergleichen entspricht und bei dem außerdem trotz kontinuierlicher Durchführung des Verfahrens die Narbung des fertigen Produkts keine Stoßstellen aufweist.

Die der Erfindung zugrundeliegende Aufgabe wird durch die im Kennzeichen des Anspruchs 1 angegebene Lehre gelöst.

Das erfindungsgemäße Verfahren löst insbesondere das schwierige Problem, das bei der Verwendung einer natürlichen Lederoberfläche als Ausgangsform dadurch entsteht, daß diese Lederoberfläche nicht in einer kontinuierlichen Form vorliegt. Somit läßt sich grundsätzlich nur eine hier durchgehend als Prägemutter bezeichnete Prägeschicht z.B. in Form eines langgestreckten Rechtecks herstellen. Wird dies zu einem Schlauch gebogen, so entsteht an den gegeneinanderstoßenden Rändern eine Diskontinuität, die so augenfällig ist, daß eine kontinuierliche Prägung einer thermoplastischen Folie allein mit einer solchen schlauchförmig gebogenen Prägemutter nicht möglich ist.

Das Wesentliche der Erfindung besteht darin, dieses Problem der Diskontinuität zu überwinden, um dadurch eine kontinuierliche Prägung einer thermoplastischen Folie in großen Mengen zu ermöglichen. Hierzu sieht die Erfindung vor, von der diskontinuierlichen Prägemutter zunächst durch Prägung einer thermoplastischen Folie eine positive Zwischenform zu schaffen, die zwar ebenfalls in ihrer Oberflächenstruktur diskontinuierlich ist, die aber die vorteilhafte Eigenschaft hat, durch thermoplastische Prägung verformt werden zu können. Erfindungsgemäß wird nun der Bereich der Positivform, in dem die Diskontinuität deutlich wird, durch die Negativform der Prägemutter überprägt, so daß dadurch die Diskontinuität verlorengeht. Da bei der Prägung die thermoplastische Folie im Bereich der gegeneinanderstoßenden Kanten auch die zu einer Verschweißung erforderliche Temperatur beim Überprägen erreicht, werden gleichzeitig die Stoßkanten miteinander verschweißt.

Da die Überprägung in Umfangsrichtung begrenzt ist, entsteht ein Übergangsbereich, in dem die überprägte Struktur in die ursprünglich mit der Prägemutter geprägte Struktur übergeht. Dieser Übergang ist jedoch so stetig, daß er in der Praxis praktisch nicht mehr sichtbar ist.

Das Verfahren läßt sich auch endlos dadurch gestalten, daß die Enden der die Zwischenstufe bildenden thermoplastischen Folienbahn vor dem Aufbringen des Silikonkautschuks miteinander verbunden werden und so eine endlose thermoplastische Folienbahn gebildet wird, wobei die die Prägung aufweisende Oberfläche der thermoplastischen Folienbahn im Bereich der gegeneinanderstoßenden Ränder unter Hitze und Druck mit einer Prägemutter überprägt und so eine endlose Positivform erzeugt wird, wobei der Silikonkautschuk über den gesamten Umfang der endlosen thermoplastischen Folienbahn aufgebracht und so eine endlose Bahn aus Silikongummi erzeugt wird, die den kontinuierlichen Gießvorgang ermöglicht. Die endlose Bahn braucht lediglich so lang zu sein, daß der aufgegossene, flüssige Kunststoff Zeit zum Ausvulkanisieren hat, um abgezogen werden zu können, bevor die die Gießunterlage darstellende Folienbahn aus Silikongummi wieder den Aufgießort erreicht.

Das Prägen der thermoplastischen Folie mit der Prägemutter kann in einfacher Weise in einer Flachpresse erfolgen, obwohl grundsätzlich auch das Prägen in einer Walzenpresse nicht ausgeschlossen ist. Auch das Überprägen der thermoplastischen Folie mit der Prägemutter kann in einer Flachpresse erfolgen, die jedoch schmal ist, derart, daß die Überprägung nur in dem Stoßbereich erfolgt. Der Preßspalt erweitert sich dabei zweckmäßigerweise in Umfangsrichtung des Schlauches zu den Rändern der Preßplatten hin, um so einen möglichst langen stetigen Übergang von der Überprägung zu der ursprünglichen Prägung zu erreichen.

Zur Herstellung der Prägetochter ist es zweckmäßig, daß der Schlauch mit der Positivform nach außen auf eine Walze aufgebracht, die Walze ständig gedreht und dabei mittels einer Rakel die Schicht von Siliconkautschuk aufgestrichen und anschließend zu der Prägetochter vulkanisiert wird. Die Dicke der Prägetochter ist dadurch besonders gleichmäßig, und das Auftragen mit der Rakel sorgt für ein gutes Eindringen des Siliconkautschuks in die Poren der Positivform.

Statt einer natürlichen Lederoberfläche kann natürlich auch jede andere Art einer Oberflächenstruktur als Grundlage dienen, beispielsweise ein Gewebe, Vlies, eine Holzoberfläche oder dergleichen.

Beispiel:

Eine Vorlage aus natürlichem Leder, Textil oder dergleichen wird auf eine ebene Unterlage gespannt und an den Kanten befestigt. Um die Kanten wird eine rahmenförmige Begrenzung gebracht und so eine Gießform gebildet, in die ein dehäsiv wirkender Siliconkautschuk gegossen wird. Dieser fügt sich der Oberflächenfeinkontur der Vorlage in jedem kleinsten Detail genau an, dringt also auch in Poren und umschließt sogar Haare. Danach wird der Siliconkautschuk vulkanisiert, geliert oder verfestigt und von der Vorlage abgezogen. Dieser Vorgang wird mehrmals wiederholt, um so mehrere Prägemütter zu erzeugen. Sie haben jeweils eine Dicke von 3 - 4 mm und werden rückseitig durch Klebestreifen miteinander verbunden.

Das so hergestellte Gebilde aus mehreren Prägemüttern wird zusammen mit einer thermoplastischen Folie mit einer Stärke von etwa 0,8 mm in eine Plattenpresse gebracht, wobei die thermoplastische Folie unten liegt und die Prägefolie mit der Prägeseite nach unten darüber.

Die thermoplastische Folie wird nun von unten direkt und zusätzlich auch von oben durch die Prägemütter hindurch auf ca. 190° erwärmt und dadurch plastifiziert. Durch gleichzeitig aufgebrachten Druck ergibt sich nach einer gewissen Zeit der genaue Abdruck der Struktur der Prägemutter auf der thermoplastischen Folie, die z.B. aus Polyvinylchlorid besteht. Danach wird gekühlt und die geprägte thermoplastische Folie herausgenommen.

Die thermoplastische Folie wird entsprechend der Länge und dem Umfang einer Prägewalze auf Maß geschnitten und zu einem Schlauch gebogen, wobei die geprägte oder Narbseite außen liegt. Die Stoßstelle wird dabei sorgfältig angepaßt und rückseitig mit Klebeband verbunden. Danach wird der Schlauch nur mit der Stoßstelle in eine schmale Flachpresse gebracht, in der über die Stoßstelle die Prägemutter gelegt wird. Danach erfolgt wiederum eine Erwärmung und Druckbeaufschlagung, so daß die gewünschte Überprägung im Bereich der Stoßstelle erfolgt. Dabei erfolgt gleichzeitig eine Verschweißung der gegeneinanderstoßenden Ränder.

Der so erzeugte, auf seiner Außenseite eine Positivform der Prägestruktur aufweisende Schlauch wird auf eine Walze gezogen und diese in ein Gestell mit Lagern gelegt und ständig rotiert. Danach wird mittels einer Rakel Siliconkautschuk in gleichmäßiger Schichtdicke aufgebracht, der anschließend zur Vulkanisation gebracht wird. Während dieser Vorgänge bleibt die Rotation der Walze erhalten, um so Ungleichmäßigkeiten in der Schichtdicke zu vermeiden.

Nach der Vulkanisation wird der so erzeugte Siliconschlauch abgezogen und umgekrempelt, so daß nun das von der Vorlage abgenommene Dessin, Leder, Textil oder dergleichen als Negativform auf der Außenfläche vorhanden ist. Der Schlauch wird über eine Walze gezogen, nachdem deren Oberfläche vorher mit einem Haftvermittler und einem Siliconklebstoff beschichtet worden ist. Die Klebeschicht wird dann zur Aushärtung gebracht.

Diese Walze wird als Prägewalze in eine Vorrichtung zur kontinuierlichen Prägung einer thermoplastischen Folie eingesetzt. Mit der Prägewalze wird eine thermoplastische Folie kontinuierlich geprägt, und ein längerer Abschnitt davon wird endlos verbunden, wobei die Verbindungsstelle mittels der Prägewalze überprägt wird, so daß dort ein kontinuierlicher Übergang des positiven Prägemusters erzeugt wird.

Danach wird auf die Seite der endlosen thermoplastischen Folie, die das positive Prägemuster aufweist, Siliconkautschuk aufgegossen oder aufgestrichen und gleichzeitig eine Gewebe-oder Gewirkbahn zur Verstärkung aufgebracht. Der Siliconkautschuk wird vulkanisiert, geliert oder verfestigt und von der Vorlage abgezogen, so daß ein endloses Band aus Silicongummi gebildet ist, das eine gewünschte Oberflächenstruktur, insbesondere eine natürliche Ledernarbung, aufweist.

Dieses endlose Band aus Silicongummi wird in eine Vorrichtung gebracht, in der es langsam und kontinuierlich umläuft. Auf die die Narbung in Negativform aufweisende Oberfläche wird flüssiger Kunststoff aufgetragen, zur Verfestigung gebracht und anschließend abgezogen und aufgewickelt.

## Patentansprüche

1. Verfahren zur Herstellung eines Gießbandes aus Silikon zum Gießen einer Kunststoffolie mit einer Narbung, inbesondere einer natürlichen Ledernarbung, indem eine Schicht von flüssigem Silikonkautschuk auf eine die Narbung durch Prägen in Positivform aufweisende Folienbahn aufgegossen oder aufgestrichen, vulkanisiert und danach abgezogen wird, **dadurch gekennzeichnet,** daß als Folienbahn eine Bahn aus thermoplastischem Kunststoff verwendet wird, zu deren Herstellung zunächst auf die Oberfläche einer Narbungsvorlage, insbesondere eines natürlichen Leders, Silikonkautschuk als gleichmäßig dicke Schicht aufgegossen oder aufgestrichen und danach zu einer Prägemutter vulkanisiert wird, daß die Prägemutter von der Narbungsvorlage abgezogen und daß mit ihr unter Hitze die Oberfläche einer thermoplastischen Folie geprägt wird, daß die thermoplastische Folie mit ihren gegenüberliegenden Rändern gegeneinanderstoßend zu einem Schlauch geformt wird, und daß die die Prägung aufweisende Oberfläche der thermoplastischen Folie im Bereich der gegeneinanderstoßenden Ränder mit der Prägemutter unter Hitze überprägt und so eine endlose Positivform erzeugt wird, auf die eine Schicht von Silikonkautschuk aufgegossen oder aufgestrichen wird, die zu einer Prägetochter vulkanisiert wird, die von der Positivform abgezogen und mit der negativen Prägeoberfläche nach außen auf die Umfangsfläche einer Prägewalze aufgeklebt wird, mit der die Folienbahn geprägt wird.

2. Verfahren nach Anspruch 1, **dadurch gekennzeichnet,** daß die Enden der thermoplastischen Folienbahn vor dem Aufbringen des Silikonkautschuks miteinander verbunden werden und so eine endlose thermoplastische Folienbahn gebildet wird, wobei die die Prägung aufweisende Oberfläche der thermoplastischen Folienbahn im Bereich der gegeneinanderstoßenden Ränder unter Hitze mit einer Prägemutter überprägt wird.

3. Verfahren nach Anspruch 1, **dadurch gekennzeichnet,** daß auf den auf die thermoplastische Folienbahn aufgegossenen oder aufgestrichenen Silikonkautschuk eine Bahn aus einem Gewirke oder Gewebe zur Verstärkung aufgebracht wird.

4. Verfahren nach Anspruch 1, **dadurch gekennzeichnet,** daß das Prägen der thermoplastischen Folie in einer Flachpresse erfolgt.

5. Verfahren nach Anspruch 1, **dadurch gekennzeichnet,** daß das Überprägen der thermoplastischen Folie in einer schmalen, im wesentlichen ebenen Flachpresse erfolgt.

6. Verfahren nach Anspruch 5, **dadurch gekennzeichnet,** daß sich der Prägespalt in Umfangsrichtung des Schlauches zu den Rändern der Preßplatten hin kontinuierlich erweitert.

7. Verfahren nach Anspruch 1, **dadurch gekennzeichnet,** daß der Schlauch mit der Positivform nach außen auf eine Walze aufgebracht und danach die Schicht von Silikonkautschuk aufgestrichen wird.

## Claims

1. A method of production of a casting-belt of silicone for costing a plastics foil with a groin, in particular a natural leather grain, by pouring or spreading a layer of liquid silicone rubber over a sheet of foil which exhibits the grain in a positive form by having been embossed with it, and than vulcanizing the layer and pulling it off, **characterized in that** as the sheet of foil a sheet of thermoplastic plastics is employed, for the production of which first of all on the surface of an original of the grain, in particular a natural leather, a uniformly thick layer of silicone rubber is poured or spread and then vulcanized into a master die, that the master die is pulled off the grained original and that with it the surface of a thermoplastic foil is embossed by heat, that the thermoplastic foil with its opposite edges abutting is formed into a tube, and that the surface of the thermoplastic foil exhibiting the embossing is reembossed in the region of the abutting edges with the master die by heat and thus an endless positive mould is generated upon which a layer of silicone rubber is poured or spread and vulcanized into a slave die which is pulled off the positive mould and with the negative die surface outwards is glued onto the peripheral area of an embossing roll by which the sheet of foil is embossed.

2. A method as in Claim 1, **characterized in that**
   the ends of the sheet of thermoplastic foil are connected together before the application of the silicone rubber and thus an endless belt of thermoplastic foil is formed, the surface of the belt of thermoplastic foil exhibiting the embossing being reembossed in the region of the abutting edges with a master die by heat.

3. A method as in Claim 1, **characterized in that**

a sheet of woven fabric is applied as reinforcement to the silicone rubber poured or spread over the sheet of thermoplastic foil.

4. A method as in Claim 1, **characterized in that**

the embossing of the thermoplastic foil is done in a flatbed press.

5. A method as in Claim 1, **characterized in that**

the reembossing of the thermoplastic foil is done in a narrow essentially plane flatbed press.

6. A method as in Claim 5, **characterized in that**

in the direction circumferential to the tube the gap in the die widens towards the edges of the press plate.

7. A method as in Claim 1, **characterized in that**

the tube with the positive mould outwards is fitted to a roll and then the layer of silicone rubber is spread over it.

**Revendications**

1. Procédé pour la fabrication d'une bande de coulée en silicone pour le coulage d'une feuille de matière synthétique avec un grain, en particulier un grain de cuir naturel, dans lequel une couche de caoutchouc silicone fluide est coulée ou enduite sur une bande continue présentant le grain en forme positive par matriçage, vulcanisée et ensuite enlevée, caractérisé en ce qu'on utilise comme bande continue une bande en matière synthétique thermoplastique pour la fabrication de laquelle on coule ou on enduit tout d'abord du caoutchcuc silicone, sous forme de couche épaisse uniforme, sur la surface d un original de grain en particulier d'un cuir naturel, et on le vulcanise ensuite pour en faire une mère de grainage, qu'on enlève la mère de grainage de l'original de grain et qu'on graine avec elle, sous apport de chaleur, la surface d'une feuille thermoplastique, qu'on forme la feuille thermoplastique en un tuyau avec ses bords opposés butant l'un contre l'autre, et qu'on surgraine la surface de la feuille thermoplastique présentant le grainage dans la région des bords en butée l'un contre l'autre, avec la mère de grainage et apport de chaleur et on crée ainsi une forme positive sans fin sur laquelle on coule ou enduit une couche de caoutchouc silicone qu'on vulcanise pour en faire une fille de grainage qu'on enlève de la forme positive et qu'on colle, avec la surface de grainage négative vers l'extérieur, sur la surface périphérique d'un cylindre de grainage au moyen duquel on graine la bande continue.

2. Procédé selon la revendication 1, caractérisé en ce qu'on relie ensemble les extrémités de la bande continue avant le dépôt du caoutchouc silicone et on forme ainsi une bande continue thermoplastique sans fin, la surface de la bande continue thermoplastique qui présente le grainage étant surgrainée avec une mère de grainage et sous apport de chaleur dans la région des bords en butée l'un contre l'autre.

3. Procédé selon la revendication 1, caractérisé en ce qu'on dépose une bande de tricot ou de tissu sur le caoutchouc silicone coulé ou enduit sur la bande continue, pour un renforcement.

4. Procédé selon la revendication 1, caractérisé en ce qu'on effectue le grainage de la feuille thermoplastique dans une presse à plat.

5. Procédé selon la revendication 1, caractérisé en ce qu'on effectue le surgrainage de la feuille thermoplastique dans une presse à plat étroite sensiblement plane.

6. Procédé selon la revendication 5, caractérisé en ce que la fente de grainage s'élargit continuellement dans la direction périphérique du tuyau vers les bords des plaques de presse.

7. Procédé selon la revendication 1, caractérisé en ce qu'on amène le tuyau, avec la forme positive vers l'extérieur, sur un cylindre et on enduit ensuite la couche de caout-chouc silicone.